# EUROPEAN PATENT APPLICATION

(11) **EP 2 017 136 A2**
(43) Date of publication of application: **21.01.2009**
(21) Application number: 08160602.2
(22) Date of filing: 17.07.2008
(51) Int. Cl.: B60R 19/26, B60R 19/28, B60R 19/34

(54) **Energy-absorbing device and method**

(30) Priority: 19.07.2007 US 929952 P
(71) Applicant: Tal & Hadas Ltd., 18550 Afula (IL)
(72) Inventor: Tayar, Eliahu, 19125, Moshav Ramat Tzvi (IL)
(74) Representative: Dr. Graf & Partner

(57) **Abstract**

An energy-absorbing device (100) consisting of a foldable parallelogram frame with an easily replaceable energy-absorbing element (110). The element energy-absorbing element device is formed to absorb at least a predefined amount of mechanical energy before it breaks down.

## Description

### BACKGROUND OF THE INVENTION

Energy-absorbing devices and methods are known in the art and may be realized in a variety of ways. However, known energy-absorbing devices and methods suffer from numerous drawbacks, such as, for example, the energy applied to the absorbing device sometimes being redirected in a way that may be dangerous and harmful, such as when a car bumper twists and bends into the car upon impact or collision, etc.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
**Figs. 1A** and **1B** are schematic front view and perspective view, respectively, of an embodiment of the present invention before its exposure to a mechanical impact;
**Figs. 2A** and **2B** are schematic front view and perspective view, respectively, of an embodiment of the present invention after its exposure to a mechanical impact; and
**Figs. 3A** and **3B** are schematic illustrations of energy-absorbing elements according to some embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

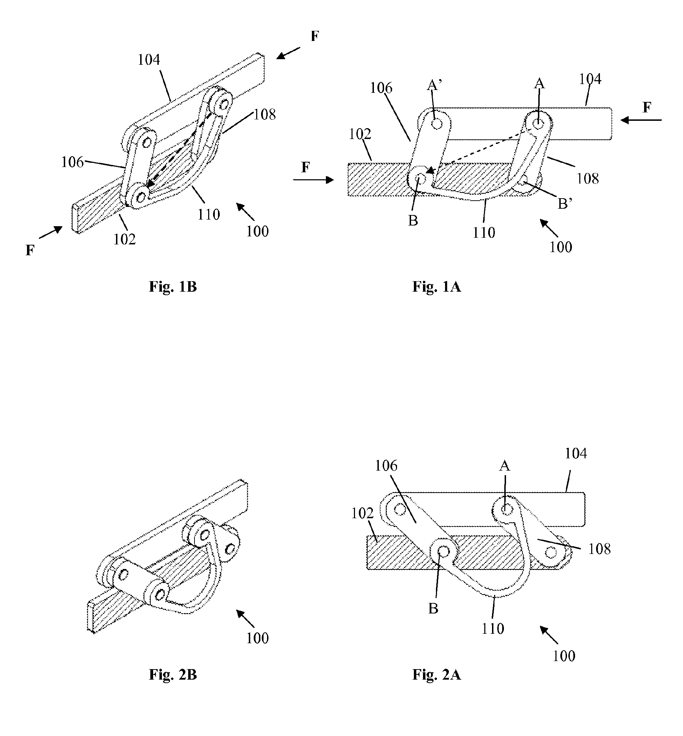

Reference is now made to **Figs. 1A** and **1B****,** which are schematic front view and perspective view, respectively, of an energy-absorbing device **100** according to embodiments of the present invention before its exposure to a mechanical impact. Energy-absorbing device **100** may comprise a first main part **102** and a second main part **104,** arranged in a parallelogram construction with secondary first and second parts **106** and **108,** so that first main part **102** is substantially parallel to second main part **104,** and secondary first and second parts **106** and **108** are substantially parallel to each other. These four parallelogram sides **102, 104, 106,** and **108** are pivotally connected through pivot points **A, A', B,** and **B'** so as to allow parallel movement of the parallelogram sides with respect to each other. In this regard, when force **F** is applied along the lines of the arrows **F** in **Figs. 1A** and **1B****,** and when the main parts of the parallelogram are free to move with respect to each other, then second main part **104** is able to move horizontally to the left with respect to the drawing and/or first main part **102** is able to move to the right, with the end result being pivot points **A** and **B** moving closer to each other. Energy-absorbing device **100** further comprises energy-absorbing element **110** connected between two opposite pivot points of said parallelogram, such as pivot points **A** and **B** in **Fig. 1A****.** When energy-absorbing element **110** is connected between points **A** and **B,** movement of the first and second main parts **102** and **104** under the action of force **F** will bend the energy-absorbing element **110** by folding it, bringing pivot points **A** and **B** closer to each other. Conversely, when energy-absorbing element **110** is connected between two other pivot points **A'** and **B'** of the parallelogram, the application of force **F** will cause energy-absorbing element **110** to un-bend in the opposite direction, causing it to straighten out, thereby bringing pivot points **A'** and **B'** further away from each other, while bringing pivot points **A** and **B** closer to each other.

Reference is now also made to **Figs. 2A** and **2B****,** which are schematic front view and perspective view, respectively, of an energy-absorbing device **100** according to embodiments of the present invention after its exposure to a mechanical impact. As is readily evident, the shortening of the distance between points **A** and **B** due to the application of force **F** bends absorbing element **110.** It is also evident that main parts **102** and **104** maintain parallelism between themselves during the change caused to device **100** by the action of force **F.**

The exact mechanical features of absorbing element **110,** such as its shape, the size and shape of its cross-section at a given point, etc., which may contribute to the amount of energy absorbed by absorbing element **110** when force **F** is applied, as well as to the amount of energy required to bend it, may be selected to achieve a desired total absorbed energy per distance of travel of first main part **102** with respect to second main part **104.** Similarly, the mechanical features of absorbing element **110** may be selected to set the amount of force applied along force arrow lines **F** that will begin to bend absorbing element **110.**

According to some embodiments of the present invention, absorbing device **100** may be useful as part of an absorbing element of a vehicle, such as a bumper in a car. According to embodiments of the present invention, one of the features of device **100** is keeping parallelism between first main part **102** with respect to second main part **104** during the absorption of the energy of the accident. This feature may be relied upon to ensure that the outer part of a bumper (not shown) connected, for example, to second main part **104,** remains in the same orientation with respect to the body of the car, to which first main part **102** may be connected.

Additionally, device **100** may be easily fixed after being involved in energy absorption, such as after having been activated due to an accident or collision, simply by replacing used absorbing element **110** with a new one. Further, according to embodiments of the present invention, absorbing element **110** may be designed to absorb energy when being stretched, in which case it may be attached to points **A'** and **B',** as discussed in detail above. Moreover, according to embodiments of the present invention, the physical and geometrical features of absorbing element **110** may be designed to provide a desired graph of energy absorption with respect to the travel of first main part **102** with respect to second main part **104.** For example, absorbing element **110** may be designed to absorb most of the energy during the beginning of the travel of first main part **102** with respect to second main part **104.**

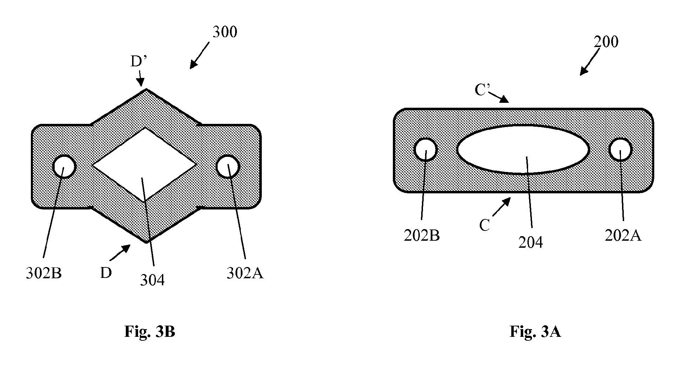

Reference is now also made to **Figs. 3A** and **3B****,** which are schematic illustrations of energy-absorbing elements **200** and **300,** respectively, according to some embodiments of the present invention. When energy-absorbing device **100** is operated so that application of force F causes the distance between the pivots **A'** and **B'** of **Fig. 1A** (to which energy-absorbing element is connected) to decrease, then energy-absorbing elements may have the shape of, for example, element **200** or element **300.** Energy-absorbing element **200** is so designed that when it is connected through its holes **202A** and **202B** to pivots **A'** and **B'** and the force developing between pivots **A'** and **B'** exceeds certain first value - and, respectively, when the energy absorbed by element **200** exceeds certain amount - then energy element **200** will be torn substantially close to or at areas **C** and **C'.**

According to another embodiment of the invention, when energy-absorbing element **300** is connected through its holes **302A** and **302B** to pivots **A'** and **B'** and when the force developing between pivots **A'** and **B'** exceeds certain second value, element **300** will first begin to elongate substantially close to or at areas **D** and **D',** absorbing the energy applied to it and transforming that energy into deformation, thereby straightening out areas **D** and **D'.** If and when element **300** passes the point of elasticity and the force applied between pivots **A'** and **B'** continues to be applied, then element **300** will be torn.

Therefore, it can readily be seen that other shapes and/or relative sizes of energy-absorbing elements **110, 200,** or **300** may be used to achieve other desired energy absorption curves and/or energy-absorbing element breaking points.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. An apparatus comprising:
a first and a second main parts connected substantially parallel to each other by a first and a second secondary parts, said main and secondary parts forming a pivotally connected parallelogram in its four comers;
an energy-absorbing element connected between two opposing pivot points of said parallelogram, wherein an angle change between said main and secondary parts of said parallelogram leads to a change in distance between said two opposing pivot points.

2. The apparatus of claim 1, wherein said energy-absorbing element comprises an elongated curved element between said two opposing pivot points, wherein said curved element is to bend when said apparatus is subject to a force applied substantially parallel to said first and a second main parts so that said two opposing pivot points get closer to each other.

3. The apparatus of claim 1, wherein said energy-absorbing element comprises an elongated element connected between said two opposing pivot points, wherein said elongated element comprises a cut out in it to form narrowed break down zones, said elongated element is to break down when said apparatus is subject to a force applied substantially parallel to said first and a second main parts so that said two opposing pivot points get closer to each other.

4. The apparatus of claims 2 or 3 wherein said energy-absorbing element is to absorb a predefined amount of energy before break down.

5. A method for absorbing mechanical energy comprising:
providing an energy-absorbing element between two opposing pivot points of an energy-absorbing device having a parallelogram-like form; and
applying a mechanical force to said parallelogram of said energy-absorbing device to change the distance between said two opposing pivot points.

6. The method of claim 5, wherein said energy absorbing element is shaped as one of an elongated curved element and elongated element which comprises a cut out in it to form narrowed break down zones.

7. The method of claim 5 wherein said energy-absorbing element is to absorb a predefined amount of mechanical energy before break down.

8. The apparatus of claim 1, wherein said energy-absorbing element comprises an elongated curved part between said pivot points, wherein said curved part is bent away from said second main part and toward said first main part.
